# EUROPÄISCHE PATENTANMELDUNG

(11) **EP 1 693 124 A1**
(43) Veröffentlichungstag der Anmeldung: **23.08.2006**
(21) Anmeldenummer: 06003389.1
(22) Anmeldetag: 20.02.2006
(51) Int. Cl.: B21C 23/22, B23K 15/06, B23K 20/00

(54) **Verfahren zur Herstellung metallischer Verbundblöcke**

(30) Priorität: 22.02.2005 DE 102005008250
(71) Anmelder: Hoesch Schwerter Profile GmbH, 58239 Schwerte (DE)
(72) Erfinder: Pleugel, Lothar, Dr., 58640 Iserlohn (DE); Wortmann, Meinolf, 58802 Balve (DE)
(74) Vertreter: Christophersen, Ulrich Rudolf

(57) **Zusammenfassung**

Die Erfindung betrifft ein Verfahren zur Herstellung von metallischen Verbundblöcken, die durch Strangpressen zu Composite-Rohren umgeformt werden. Composite-Rohre werden in chemisch - thermischen Betriebsbereichen angewendet und bestehen aus mindestens zwei unterschiedlichen Stahlwerkstoffen, um beispielsweise Korrosionsschutzanforderungen und Warmfestigkeitskriterien gleichzeitig erfüllen zu können.

Es ist die Aufgabe der Erfindung, Composite-Rohre aus Stahl aus solchen Verbundblöcken herzustellen, die auf wirtschaftliche Weise durch Nutzung bewährter Vormaterialien in hoher Qualität gefertigt werden können.

Gelöst Wird die Aufgabe dadurch, dass die Verbundblock-einzelemente an ihren Fügeflächen durch spanende Bearbeitung metallisch blank bearbeitet und anschließend durch Elektronenstrahlschweißen zum fertigen Verbundblock gefügt werden. Anschließend wird der Verbundblock durch Strangpressen zum Composite-Rohr mit guter metallischer Bindung umgeformt.

## Beschreibung

Die Erfindung betrifft ein Verfahren zur Herstellung metallischer Verbundblöcke aus separat gefertigten Verbundblockeinzelelementen.

Für den industriellen Bereich der thermisch-chemischen Prozesstechnik werden Rohre eingesetzt, die zur Erfüllung der häufig komplexen Betriebsanforderungen in korrosiven, thermischen Milieus aus mindestens zwei unterschiedlichen metallischen Werkstoffen bestehen. So kann beispielsweise der Außenbereich solcher Rohre, die auch als Composite-Rohre bezeichnet werden, aus Korrosionsschutzgründen vorzugsweise aus einem austenitischen, korrosionsbeständigen Werkstoff bestehen, wohingegen der innere, druckführende Rohrbereich durch einen warmfesten Kohlenstoffstahl gebildet wird. Auch die umgekehrte Anordnung der Rohr-Werkstoffkomponenten ist bei entsprechenden Anwendungsfällen Stand der Technik.

Composite-Rohre werden hauptsächlich im Kesselbereich von Müllverbrennungsanlagen von Müllhelzkraftwerken eingesetzt. Sie finden femer Verwendung in Laugenregeneratoren der Zellstoffindustrie - "black liquor recovery boiler" des Kraft-Verfahrens - und werden ferner als' Wärmeaustauscherrohre bei thermischen katalytischen Spaltprozessen verwendet.

Zur Herstellung solcher Composite-Rohre gibt es im wesentlichen zwei Verfahrensweisen. Der erste Weg über den Verbundblock, der umformtechnischen Vorstufe der Rohrfertigung, zeichnet sich dadurch aus, dass die oben beispielhaft genannte Werkstoffkombination Austenit/Kohlenstoffstahl bereits im Vorprodukt definiert angelegt wird. Bei der nachfolgenden Warmumformung des Verbundblocks entsteht ein Composite-Rohr aus mindestens zwei unterschiedlichen, miteinander verbundenen Stahlwerkstoffen. Dabei ist der Wandstärkenanteil der jeweiligen Stahlwerkstoffkomponente an der Gesamtwandstärke des fertigen Composite-Rohres bereits beim Verbundblockaufbau unter Einbeziehung des werkstoffspezifischen Fließverhaltens bei der Warmumformung zu berücksichtigen.

Der zweite Weg zur Composite-Rohrherstellung ist das schweißtechnikbasierte, sogenannte Cladden von Rohren, die zunächst auf übliche Weise gefertigt wurden. Beim Cladden wird durch ein Sohmefzschweißverfahren die zusätzliche Werkstoffkomponente auf die Rohroberfiäche solange durch Aufschweißen aufgetragen, bis die gewünschte Schichtstätke von in der Regel einigen Millimetem erreicht ist. Beim Stand der Technik erfolgt das Cladden entweder automatisch durch ein maschinelles Verfahren, oder per Hand.

Bei allen Arten der Composite-Rohrherstellung kommt es darauf an, dass zwischen den einzelnen Werkstoffkomponenten des Rohres eine metallische Bindung reproduzierbar hergestellt wird. Diese metallische Bindung, die auch bei Kaltbiegeprozessen, denen das Rohr im Zuge seiner Weiterverarbeitung unterworfen ist, nicht verloren gehen darf, sorgt dafür, dass im Betriebseinsatz die Wärmeleitung durch die gesamte Rohrwand hindurch optimal ist, und es zu keinen Wirkungsgradbeemträchtigungen bei Verwendung in Kesseln kommt.

Bei einem Verfahren zur Verbundblockherstellung nach der EP 0 958 078 B1 wird auf einen Rundstab oder ein Rohr aus Kohlenstoffstahl eine zweite, flüssige Werkstöffkömponente im Wege des Gasverdüsens durch Ablagerung feinverteilter Met811tiöpfchen aufgetragen. Dieses auch Osprey-Technologie genannte Verdüsungsverfahren ist in der GS 1,379,261 und GB 1,472,939 näher beschrieben. Der so hergestellte Osprey-Verbundbiock wird anschließend durch Strangpressen zum Composite-Rohr umgeformt.

Die EP 1 002 139 B1 beschreibt ein Verfahren zur Verbundbtockherstellung, bei dem die beiden Werkstoffkomponenten des späteren Composite-Rohres zunächst konventionell durch Warmwalzen zu Rundstäben unterschiedlichen Durchmessers ausgewalzt werden. Nach dem Warmwalzen werden die Rundstäbe abgelängt und mit konzentrischen Längsbohrungen derart versehen, dass der Rundstab mit dem größeren Durchmesser eine Bohrung erhält, in die der Rundstab mit dem kleineren Durchmesser hineingeschoben werden kann. Nach dem Positionieren des kleineren Rundstabs in der Bohrung des größeren wird diese Kombination durch Warmstrangpressen zu einem Composite-Rohr umgeformt.

Die DE 30 44 589 C2 beschreibt ein Verfahren zur Herstellung nahtloser außenplattierter Stahlrohre durch Strangpressen, wobei ein Verbund block in der Weise hergestellt wird, dass ein hochlegierter Plattierungswerkstoff in vorbestimmter Stärke auf ein entsprechendes rundes Kernmaterial aufgeschweißt wird. Nach vorausgegangenem Ausbohren des Kernwerkstoffs erfolgt die Umformung des Verbundblocks zum Composite-Rohr durch Strangpressen und/oder Kaltpilgern.

Die DE 33 14 264 C2 beschreibt ein Verfahren zur Herstellung von Composite-Rohren, bei dem zwei oder drei Einzelrohre zunächst unterschiedlich stark erwärmt und zur Erzielung eines Schrumpfsüzes ineinander geschoben werden. Anschließend wird mittels einer Elektronenstrahl-Schweißeinrichtung längs beider Stirnkanten des Rohres eine die Stirnkanten der Einzelrohre miteinander verbindende, dichte Schweißnaht gezogen. Sodann gelangt das Rohr in eine heißisostatische Presse. In der Argongasatmosphäre der Presse kommt es zu einer metallurgischen Bindung an den Rohrgrenzflächen des Composite-Rohres, bevor dieses abschließend noch einem Streckprozeß unterzogen wird.

In der JP 06170534 A wird ein automatisches Cladding-Verfahren zum Aufschweißen hochlegierter Stahlwerkstoffe auf Rohr-Mantelflächen beschrieben, und die JP 09314384 offenbart eine Vorrichtung zum Intiencladden von Rohren. Der Nachteil des Claddens ist, dass, verfahrensbedingt, durch den Schmelzschweißprozess immer eine mehr oder minder starke Vermischung zwischen dem Rohrgrundwerkstoff und dem aufgetragenen höheriegierten Material stattfindet. Dies führt zu einer Veränderung der chemischen und mechanischen Werkstoffeigenschaften. Der Aufmischungseffekt ' hängt neben den Schweißparametern von der Einbrandtiefe, der mittleren Lagendicke und der Lagenzahl ab. Darüber hinaus erzeugt das Cladden mehr oder weniger rauhe Rohroberflächen, an denen Verbrennungs- und Reaktionsprodukte anhaften, und die infolge -Kerbwirkung Orte von Anrissen sein können.

Bei der Nutzung der Verbundblocktechnik kann bereits durch das Strangpressen eine glatte Rohroberfläche erzeugt werden. Ebenso werden in der Regel übermäßig starke

Aufmischungen vermieden.

Der Nachteil der auf dem Verdüsungsverfahren beruhenden Verbundblocktechnik ist, dass in der Herstellungskette auf ein aufwendiges, nicht immer verfügbares Sonderfertigungsverfahren zurückgegriffen werden muss. Ein gewisser werkstofflicher Übereinsatz und eine Mindesgröße der gefertigten Stückzahlen, die nicht zu gering sein darf, liegen in der Natur der auf Verdüsung basierenden Verbundblocktechnik.

Sofem die Verbundblocktechnik auf dem Zusammenfügen konventionell erzeugter Verbundblockeinzelelemente basiert, gilt es, drei verschiedene technische Kriterien zu erfüllen:
1. Das den Außen- oder Innenbereich des Verbundblocks bildende Verbundblockeinzelelement, das als Starkwandrohr betrachtet werden kann, sollte mit geringem Werkstoff-Entfall herstellbar sein.
2. Das Herstellungsverfahren muss eine stets optimale metallische Bindung ohne störende Oxidschicht zwischen den Werkstoffkomponenten sicherstellen.
3. Die einzelnen Werkstoffkomponenten des Verbund blocks müssen lagestabil zueinander sein, damit sie den Warmumformprozess unbeschadet überstehen.

Es liegt daher der Erfindung die **Aufgabe** zugrunde, ein Verfahren vorzuschlagen, mit dessen Hilfe eine kostengünstige und gleichzeitig qualitativ anspruchsvolle Fertigung von Composite-Rohren gewährleistet werden kann. Dabei soll vorzugsweise auf leicht verfügbare Möglichkeiten der Halbzeug-Herstellung zurückgegriffen und der Werkstoff-Entfall minimiert werden.

**Gelöst** wird die Aufgabe durch ein Verfahren mit den Merkmalen des Anspruchs 1. Die Herstellung metallischer Verbundblöcke aus Stahl erfolgt dabei durch das Zusammenfügen zunächst separat gefertigter Verbundblockeinzelelemente, deren Grenzflächen vor dem Zusammenfügen metallisch blank bearbeitet werden. Dies erfolgt durch spanende Bearbeitung der Flächen und vorzugsweise mit solcher maßlicher Toleranz, dass sich die Verbundblockeinzelelemente ohne weiteres ineinander schieben lassen. In einem weiteren Schritt werden die Elemente durch partielles Elektronenstrahlschweißen (EB-Schweißen) fest miteinander zum Verbundblock verbunden. Dieser wird dann in einer Stahl-Strangpresse zum Composite-Rohr umgeformt,

Vorteilhafte Ausgestaltungen des erfindungsgemäßen Verfahrens bilden die Gegenstände der Unteransprüche.

Weitere Einzelheiten, Merkmale und Vorteile der Erfindung werden nachfolgend anhand der beigefügten Zeichnungen näher erläutert. Darin zeigen:
- **Fig.1**: zwei Verbundblockeinzelelemente 1 und 2 mit den Außendurchmessern D_{A} und dₐ, der Wandstärke S, wobei der Durchmesser dₐ von Element 2 gerade in die Bohrung D₁ von Element 1 hineinpasst, und Verbundblockeinzelelement 2 mit einer zentralen Bohrung 7 versehen ist;
- **Fig. 2**: das Anordnungsschema einer Elektronenstrahlschweißanlage für Verbundblöcke mit Vakuumkammer 11, Elektronenstrahlgenerator 12, Elektronenstrahl 13, zu schweißendem Verbundblock 4, Manipulationseinrichtung 15, Vakuumpumpstation 16 und Anlagensteuerung 17;
- **Fig.3**: einen durch Elektronenstrahlschweißen gefügten Verbundblock mit Außendurchmesser D_{A}, Innenbohrung dᵢ und die durch das Schweißen fest miteinander verbundenen Durchmesser Dₗ und d_{a:}
- **Fig.4**: den Verbuntiblock nach Fig. 3 im Längsschnitt, darin ist L_{EB} die durch das Elektronenstrahlschweißen verbundene Verbundblocklänge, Lₚₛ die gefügte, aber nicht verschweißte Verbundblocklänge, und L die Gesamtlänge des Verburidblocks-,
- **Fig. 5**: in einer vereinfachten Schnittdarstellung Einzelheiten des Hindurchtreibens des Verbundblocks durch eine Stahl-Strangpresse;
- **Fig.6**: ein Verbundblockaußenelement 1 mit den Durchmessern **D**_{**A**} und D₁ und der Wandstärke S, das auf Basis der Blechtechnologie kalt gebogen und durch Strahlschweißen in der Schweißstelle 6 zum Starkwandrohr gefügt wurde;
- **Fig. 7**: ein Verbundblockaußeneiement 1, das durch drei unterschiedliche Teilelemente 1a. 1 b, 1 c schalenartig aufgebaut ist und
- **Fig. 8**: eine Detailansicht der in Fig. 7 mit VIII bezeichneten Einzelheit

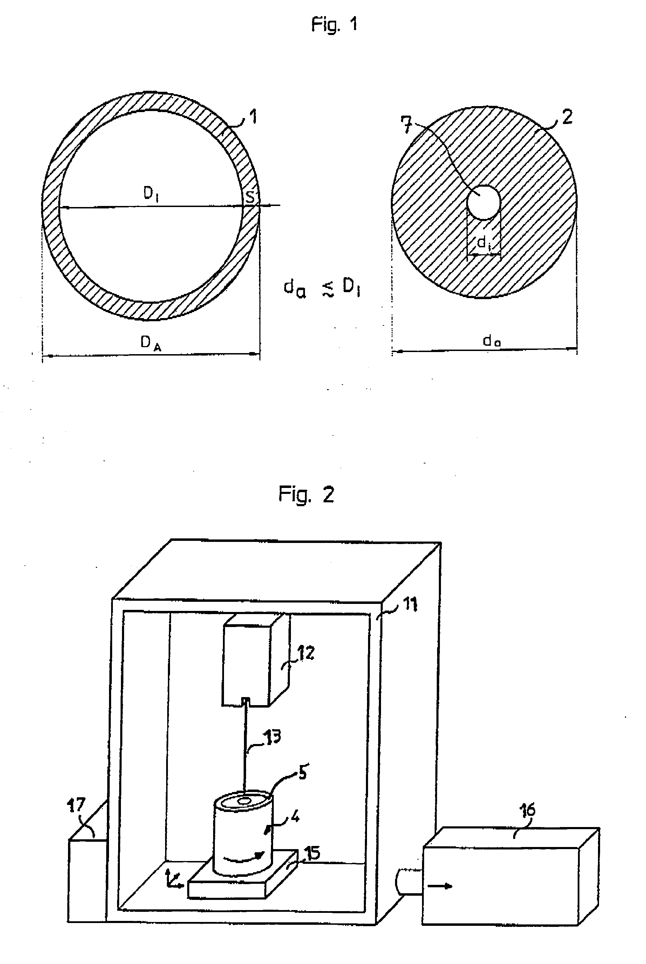

Bei der Fertigung der in **Fig. 1** dargestellten Verbundblockeinzelelemente 1, 2 erfolgt in einem ersten Fertigungsschritt eine Werkstückvorbereitung. Hierzu werden die Bohrungsfläche entsprechend Dₗ, des später äußeren Elements 1 und die Mantelfläche entsprechend dₐ des später inneren Elements 2 metallisch blank, entkohlungsfrei und sauber bearbeitet. Dies erfolgt durch spanende Bearbeitung, vorzugsweise eine Drehbearbeitung der beiden Fügeflächen mit anschließender Reinigung. Die Oberflächen sind dann frei von Fehlern wie Etltkohfungen oder Randoxidationen.

Eine sich nach erfolgter spanender Bearbeitung einstellende Durchmesserdifferenz von Dₗ₋dₐ von etwa 0,2 bis 0,4 mm ist mit dem Ziel einer vorteilhaften geometrischen Gestaltung des Fügespalts für das spätere Elektronenstrahlschweißen (EB-Schweißen) anzustreben.

Bei solcher Tolerierung der Fügeflächen lassen sich die Elemente 1,2 ohne weiteres ineinander schieben. Besondere Hilfsschritte wie z.B. eine vorherige Erwärmung des äußeren Elements 1, sind nicht erforderlich.

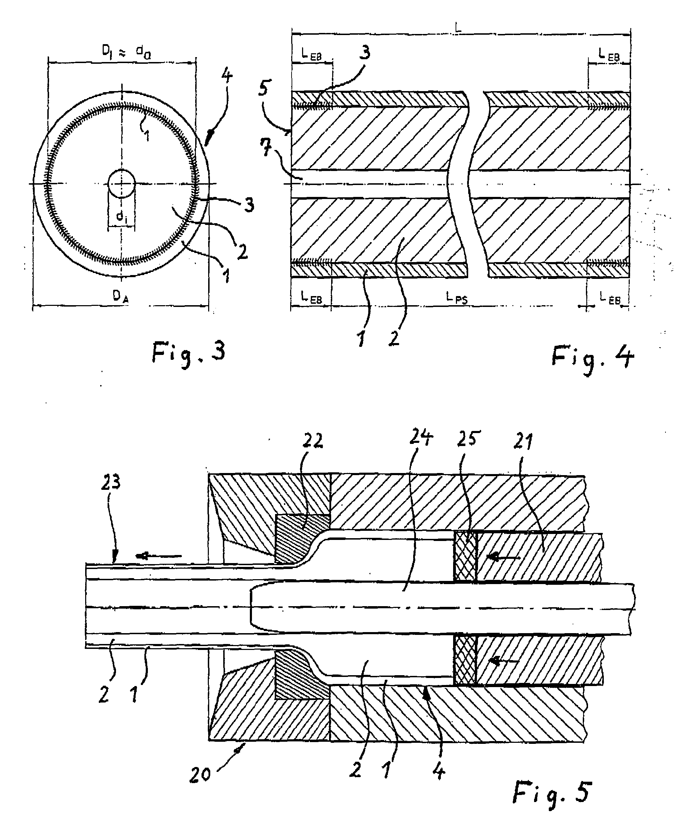

Nach abgeschlossener Werkstückvorbereitung und dem Zusammenfügen erfolgt das partielle EB-Schweißen nach dem in **Fig. 2** gezeigten Schema. Hierbei wird - ohne Schweißzusatzwerkstoff - auf beiden Stirnflächen 5 des Verbundblocks 4, vgl. Fig. 3, eine konzentrische EB-Schweißnaht 3 bei D₁ bzw. dₐ erzeugt, die aufgrund der eingestellten Schweißparameter bis in die vorgewählte Tiefe L_{EB}, **Fig. 4,** in den Verbundblock 4 eindringt. Die Tiefe L_{EB} ist geringer als 100 mm, vorzugsweise beträgt sie ca. 50 mm.

Das partielle EB-Schweißen hat als wesentlicher Fertigungsschritt des erfindungsgemäßen Verfahrens folgende Vorteile:
1. Das Elektronenstrahlschweißen ist das einzige Schmelzschweißverfahren, das ohne Schweißzusatzwerkstoff sehr tief - bei Stahl bis zu ca. 150 mm - in den Werkstoff einzudringen vermag und dabei eine nur wenige Zehntel Millimeter breite Schweißnaht erzeugt. Durch dieses Charakteristikum des Elektronenstrahls werden zwei für das erfindungsgemäße Verfahren wichtige Vorraussetzungen realisiert,
   a) Erzeugung einer genügenden Einschweißtiefe L_{EB} = 100 mm, so dass die beim Strangpressen auftretenden starken Schubkräfte zwischen den Verbundblockelementen 1,2 sicher aufgenommen werden können, ohne die Elemente 1, 2 voneinander loszureißen.
   b) Hinreichend schmale Schweißnähte 3, so dass die Aufmischung der Werkstoffe im Fügebereich deutlich minimiert werden kann, und die ursprünglichen Werkstoffeigenschaften kaum negativ beeinflusst werden.
2. Das Elektronenstrahlschweißen - abgesehen vom Sonderfall des atmosphärischen EB-Schweißens - findet in den industriellen Schweißanlagen unter Feinvakuum bis hin zum Hochvakuum statt. Die Systemdrücke bewegen sich dementsprechend im Bereich von 10⁻² mbar bis etwa 5 × 10⁻⁴ mbar. In diesem Druckbereich ist der Sauerstoffpartialdruck des Gasraums so gering, dass merkliche Metalloxidationen in den beim EB-Schweißen erfassten Fügebereichen L_{EB} ausgeschlossen sind.
3. Der Verbundblockbereich Lₚₛ nach **Fig. 4** wird im Gegensatz zu den Zonen L_{EB} nicht durch das Elektronenstrahlschweißen verbunden. Demzufolge wird hier jegliche Aufmischung zwischen den unterschiedlichen Werkstoffkomponenten vermieden. In diesem Bereich wird die für das Endprodukt geforderte einwandfreie metallische Bindung erst bei der Umformung des Verbundblocks durch das spätere Stahl-Strangpressen infolge des Effekts des Pressschweißens (Diffusionswirkung unter Druck und Temperatur) erreicht. Gleichwohl gilt auch für diesen werkstoffkundlichen Vorgang, dass der vom E&Schweißprozess her konservierte niedrige Sauerstoffpartialdruck die Voraussetzung für die Oxidationsfreiheit des Fügebereichs ist, und somit die Vorbedingung für eine optimale metallische Bindung zwischen den Werkstoffkomponenten des Composite-Rohres. Hinzu kommt die vorteilhafte Wirkung der metallisch blank vorbereiteten Fügeflächen infolge der im ersten Schritt durchgeführten spanenden Bearbeitung.

Nach Abschluss des EB-Schweißprozesses erfolgt das für den Erfolg des Verfahrens wichtige Stahl-Strangpressen des Verbundblocks 4. Hierzu wird der Verbundblock zunächst auf eine Temperatur zwischen 1100° C und 1300° C und vorzugsweise zwischen 1150° C und 1250° C erhitzt und in die in Figur 5 schematisch dargestellte Strangpresse 20 eingesetzt. Der Druckstempel 21 der Stahl-Strangpresse mit vorgesetzter Pref3scheibe 25 treibt das Material des Verbundblocks 4 mit sehr hohem Druck von ca. 5.000 bar durch eine Matrize 22 der Strangpresse. Wegen des sehr schnellen Vortreibens des Druckstempels 21 kommt es zu einer fast schlagartigen Verformung des Werkstoffes beim Hindruchtreiben durch die Matrize 22. Das aus der Matrize 22 austretende, reduzierte Rohrprofil 23 stellt das in dem Verfahren gewonnene Endprodukt dar. Um ein vollständiges Zulaufen des in der Strangpresse gebildeten Rohrprofils 23 zu vermeiden, ist in der Strangpresse 20 zusätzlich ein zentraler Dom 24 vorgesehen, der sich bis in die Ebene der Matrize 22 erstreckt. Der . Durchmesser des Dorns 24 bestimmt im Wesentlichen den Inriendurchmesser des aus der Strangpresse 20 austretenden Rohrprofils 23.

Der gesamte Pressvorgang des Verbundblocks 4 nimmt nur wenige Sekunden in Anspruch. Wegen der Geschwindigkeit der ablaufenden Prozesse entsteht an der Grenzfläche zwischen den beiden Einzelelementen 1, 2 des Verbundblocks in Folge der druckunterstützten Diffusionsvorgänge eine hervorragende metallurgische Verbindung mit hoher thermisch-mechanischer Belastbarkeit. In der Matrize 22 lässt sich eine ca. 20-fache Warmumformung des zuvor ca. 0,7 bis 1,5 Meter langen Blocks 4 erzielen.

Der besondere Vorteil des Stahl-Strangpressens liegt daher in den diffusionsbedingten metallurgischen Prozessen, welche in Sekundenbruchteilen ablaufen. In Folge der extrem schnellen plastifizierenden Umformung werden die Grenzflächen der Einzelelemente 1, 2 außerordentlich stark vergrößert. Dabei entstehen "frische" Grenzflächen, deren Außenatome weder durch metallische Nachbaratome, noch durch Atome kontaminierter dritter Substanzen in ihrer Reaktivität beeinträchtigt sind. Der hohe Druck (entsprechend den geringsten Atomabständen der Reaktionspartner zueinander) und die hohe Reaktivität der Atome in den neu gebildeten Grenzflächen führen dazu, dass der im dem Verfahren erreichte, diffusionsbasierte Bindungsprozess auf die bereits erwähnte kurze Prozesszeit zurückgeführt werden kann.

Das in der erfindungsgemäßen Prozesskette enthaltene Strangpressen kann neben seiner Hauptaufgabe, den Verbundblock 4 zum Composite-Rohr umzuformen, zusätzlich bewirken, Verbundblockeinzelelemente 1, 2 mit reduziertem Entfall teuren Werkstoffs zu fertigen. So ist es möglich, das äußere Verbundblockaußenelemetit 1 statt durch Bohren oder Innendrehen des Innendurchmessers D₁ durch einen in der Strangpresse nach dem Verfahren des indirekten Pressens durchgeführten axialen Lochungsprozeß zu fertigen. Während im Falle der zerspanenden Bearbeitung durch Bohren - bei Unterstellung gängiger Vorblockabmessungen von D_{A} = ∅ 170 mm und D, = ∅ 140 mm - ein Werkstoffentfall von ca. 60 bis 70 % eintritt, kann dieser durch Anwendung des Lochungsprozesses inklusive des nachgeschalteten Überdrehens auf 20 bis 25 % reduziert werden.

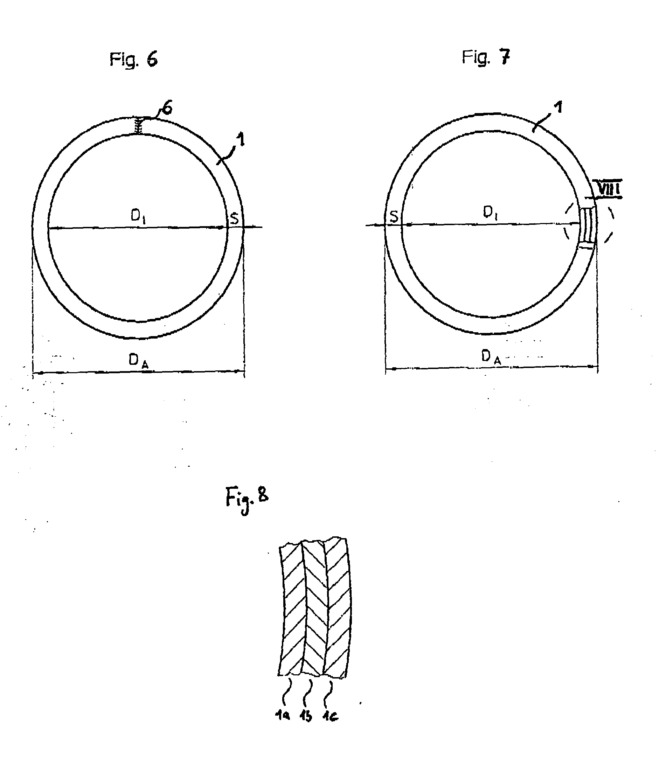

Eine weitere, Werkstoff und damit Materialkosten sparende Fertigungsaltemative ergibt sich durch die Anwendung der Blechbiegetechnik in Verbindung mit dem Strahlschweißen. Nach **Fig. 6** wird ein vorbereitetes Blech in der gewünschten Werkstoffzusammensetzung und der Dicke S durch Kaltbiegen und Strahlschweißen der Stoßstelle 6, **Fig. 6**, so verarbeitet, dass ein Starkwandrohr 1 mit dem Innendurchmesser Dₗ und dem Außendurchmesser D_{A} entsteht. Dieses Starkwandrohr 1 kann dann entsprechend den **Fign. 1 bis 4** zur Fertigung eines vollständigen Verbundblocks 4 benutzt werden.

In weiterer Ausgestaltung wird vorgeschlagen, das einem Starkwandrohr entsprechende Verbundblockelement 1 gemäß der Darstellung in **Fig. 1** bzw. **Fig. 6** in weitere Unterelemente entsprechend Einzelheit VIII, **Fig. 7,** zu unterteilen. Eine solche Lösung ist für die Verwendung eines Composite-Rohres in einer Betriebsumgebung vorteilhaft, in der die Kombination von thermischer Ermüdung und Spannungsrisskorrosion ein wesentliches Gefahrenpotential für die Lebensdauer darstellt. Stark voneinander abweichende Wärmeausdehnungskoeffizienten des aus austenitischem Stahl bestehenden Außenbereich eines Composite-Rohres einerseits, und seines Innenbereiches aus Kohlenstoffstahl andererseits können zu einem deutlichen Beitrag zu einem nachteiligen Spannungsniveau in der Rohrwand führen. Ein Mehrlagenwerkstoffaufbau der Rohrwand aus Teilelementen 1a, 1 b, 1 c, wie in **Fig. 7** und **8** dargestellt, der eine entsprechend sanfte Abstufung der Wärmeausdehnungskoeffizienten ohne große Sprünge bewirkt, kann zu einer Reduzierung des Spannungsniveaus in der Composite-Rohrwand beitragen und dadurch eine Rissbildung vermeiden.

## Patentansprüche

1. Verfahren zur Herstellung metallischer Verbundblöcke aus separat gefertigten Verbundblockeinzelelementen, **dadurch gekennzeichnet, dass** die Verbundblockeinzelelemente an ihren Fügeflächen durch spanende Bearbeitung metallisch blank bearbeitet und anschließend durch Elektronenstrahlschweißen (EB-Schweißen) zum Verbundblock gefügt werden, und dieser anschließend durch Stahl-Strangpressen zum Composite-Rohr umgeformt wird.

2. Verfahren nach Anspruch 1,**dadurch gekennzeichnet, dass** das EB-Schweißen im Vakuum erfolgt, und dass sich die konzentrischen oxid-freien EB-Schweißnähte von den Stirnflächen des Verbundblocks aus bis in eine Tiefe L_{EB} in den Verbundblock hinein erstrecken.

3. Verfahren nach Anspruch 2, **dadurch gekennzeichnet, dass** sich die EB-Schweißnähte bis in eine Tiefe L_{EB} von 50 mm bis 100 mm erstrecken.

4. Verfahren nach Anspruch 2, **dadurch gekennzeichnet, dass** sich die EB-Schweißung zwecks Aufbau ausreichender mechanischer Festigkeit für das später erfolgende Umformen durch Strangpressen, bis zur Tiefe L_{EB} erstreckt, wobei der größere Streckenantell L_{PS} der Gesamtlänge L des Verbundblocks aber nicht geschweißt wird und somit völlig frei von Aufmischungen zwischen den beteiligten Werkstoffkomponenten bleibt.

5. Verfahren nach Anspruch 4, **dadurch gekennzeichnet, dass** die metallische Bindung entlang der Strecke L_{PS} des Verbundblocks, während des Strangpressens des Verbundblocks zum Composite-Rohr, durch druck- und temperaturgesteuerte Diffusionsvorgänge infolge eines Pressschweißeffekts hergestellt wird.

6. VerfahrennachAnspruch5, **dadurch gekennzeichnet, dass** die durch das Pressschweißen entstehende metallische Bindung infolge des geringen Sauerstoffpartialdrucks nicht durch Oxidbildung qualitativ beeinträchtigt wird.

7. Verfahren nach einem der Ansprüche 1 bis 6, **dadurch gekennzeichnet, dass** das Elektronenstrahlschweißen in einem Vakuum im Bereich von 10⁻² mbar bis 5 x 10⁻⁴ mbar durchgeführt wird.

8. Verfahren nach einem der Ansprüche 1 bis 7, **dadurch gekennzeichnet, dass** das Verbundblockeinzeielement durch Blechbiegen und StrahlsChweißen hergestellt wird.

9. Verfahren nach einem der Ansprüche 1 bis 7 , **dadurch gekennzeichnet, dass** das Verbundblockeinzelelement schalenartig aus Stahlwerkstoffen mit aufeinander abgestimmten Wärmeausdehnungskoeffizienten aufgebaut ist.

10. Verfahren nach einem der Ansprüche 1 bis 7, **dadurch gekennzeichnet, dass** das Verbundblockeinzelelement durch indirektes fochendes Strangpressen mit anschließendem Überdrehen hergestellt wird.

11. Verfahren nach Anspruch 10 **dadurch gekennzeichnet, dass** das Strangpressen und das indirekte lochende Strangpressen auf derselben Strangpresse realisiert werden.

12. Verfahren nach einem der vorangehenden Ansprüche, **dadurch gekennzeichnet, dass** das Stahl-Strangpressen bei einer Btocktemperatur von 1150 bis 1250° C erfolgt.

13. Verfahren nach einem der vorangehenden Ansprüche, **dadurch gekennzeichnet, dass** das Stahl-Strangpressen über einen zentral angeordneten Dorn erfolgt.
